Europäisches Patentamt

European Patent Office

Office européen des brevets

(11) Veröffentlichungsnummer: **0 368 804**

**A1**

## (12) EUROPÄISCHE PATENTANMELDUNG

(21) Anmeldenummer: 89810821.2

(22) Anmeldetag: 01.11.89

(51) Int. Cl.5 **E04F 15/024, E04B 5/48, F24D 3/14, F24D 5/10**

(30) Priorität: 07.11.88 CH 4130/88

(43) Veröffentlichungstag der Anmeldung:
16.05.90 Patentblatt 90/20

(84) Benannte Vertragsstaaten:
AT BE CH DE ES FR GB GR IT LI LU NL SE

(71) Anmelder: BALZ VOGT AG
Industriestrasse 1-15
CH-8855 Wangen SZ(CH)

(72) Erfinder: Vogt, Balz
Bahnhofstrasse 21 a
CH-8855 Wangen SZ(CH)

(74) Vertreter: Breiter, Heinz
Patentanwalt H. Breiter AG
Schaffhauserstrasse 27 Postfach 1163
CH-8401 Winterthur(CH)

(54) **Tafelförmig ausgebildetes Stützteil für den Hoch- und Tiefbau.**

(57) Das Stützteil hat Stoss- bzw. Ueberlappungsränder zum Zusammenfügen und parallel zu den Rändern in Abstand regelmässig angeordnete, einseitig ausgebildete Vertiefungen, welche dicht verschliessend zur Aufnahme einer fliessfähigen, selbstaushärtenden Masse geeignet sind. Das mit den Vertiefungen auf einer Unterlage aufliegende Stützteil (10) bildet bauseits einen durchgehenden Hohlraum zur Aufnahme von Leitungen und/oder Medien.

Das Stützteil (10) besteht aus einer Grundplatte (12) mit Ausformungen (14), welche sich in Richtung einer parallel zur Ebene (E) dieser Grundplatte (12) verlaufenden Oeffnung (16) verjüngen. Auf diese Oeffnungen (16) sind Füsse (20) aufsetzbar, welche wenigstens teilweise hohl ausgebildet und auf der der Grundplatte (12) zugewandten Stirnseite offen, an der anderen Stirnseite verschlossen sind.

**Fig. 2**

## Tafelförmig ausgebildetes Stützteil für den Hoch- und Tiefbau

Die Erfindung bezieht sich auf ein tafelförmig ausgebildetes, flexibles Stützteil für den Hoch- und Tiefbau, mit Stoss- bzw. Ueberlappungsrändern zum Zusammenfügen und parallel zu den Rändern in Abstand regelmässig angeordneten, einseitig ausgebildeten Vertiefungen, welche dicht verschliessend zur Aufnahme einer fliessfähigen, selbsthärtenden Masse geeignet sind, wobei das Stützteil nach dem Einfüllen der Masse dank der Flexibilität Unebenheiten ausgleichend mit allen Vertiefungen auf einer Unterlage aufliegt und bauseits einen durchgehenden Hohlraum zur Aufnahme von Leitungen und/oder Medien bildet. Weiter betrifft die Erfindung die Verwendung des Stützteils als formgebende Schalung.

Aus der WO 86/02120 beispielsweise ist es bekannt, einen Hohlboden dadurch herzustellen, dass eine fliessfähige, selbstaushärtende Masse in eine tragfähige, biegbare Stützfolie, die verlorene Schalung, gegossen wird. Die Tragfüsse der Folie ruhen auf einem Unterboden und werden mit dem Material des Oberbodens ausgefüllt.

In der Praxis werden die Folien vor dem Eingiessen der Masse überlappend ineinander verlegt, was einen beträchtlichen Mehraufwand an Folienmaterial zur Folge hat. Weiter vermögen die Stützfolien wohl die eingegossene Masse zu tragen, sie sind jedoch nicht begehbar. Es müssen spezielle Arbeitsbühnen mit dem Raster der Folie entsprechend angeordneten Beinen geschaffen werden. Schliesslich müssen, dies ist von nicht zu unterschätzender wirtschaftlicher Bedeutung, für verschiedene Höhen der Unterbodenhohlräume eine entsprechende Anzahl von Folien an Lager gehalten und auf die Baustellen transportiert werden.

Die DE-C1 3434872 offenbart ein vorgefertigtes Bauelement für die Herstellung von Hohlböden, mit an eine starre Tragplatte angeformten Füssen. Ueber die Füsse ist ein individuell höhenverstellbarer Schuh gestülpt, der mit dem betreffenden Fuss einen Reibschluss bildet und teleskopartig verschiebbar ist. Eine tragfähige Stabilität wird nach dem Einfüllen und Erhärten der Masse erreicht. Die in den Fuss eingefüllte Masse kann durch ein Loch in den Schuh fliessen und diesen füllen. Auch nach dem Erstarren hat das Bauelement noch eine statische Funktion. Dieses Bauelement ist teuer, die Schuhe müssen exakt auf den Aussendurchmesser der Füsse eingeschliffen sein, und die Montage ist kompliziert, weil schon vor dem Einfüllen der Masse alle Füsse auf einer nicht ebenen Unterlage aufliegen müssen.

Der Erfindung liegt die Aufgabe zugrunde, ein tafelförmig ausgebildetes Stützteil für den Hoch- und Tiefbau der eingangs genannten Art zu schaffen, welches alle technischen Anforderungen für einen Hohlboden erfüllt, kostengünstig zu beschaffen, einfach zu montieren und in einer möglichst niedrigen Zahl von Varianten an Lager gehalten werden kann. Das Stützteil soll vor dem Eingiessen der Masse vorzugsweise ohne Hilfsmittel begehbar sein.

Die Aufgabe wird erfindungsgemäss dadurch gelöst, dass das Stützteil aus einer flexiblen Grundplatte mit Ausformungen, welche sich in Richtung von deren parallel zur Ebene der Grundplatte verlaufenden Oeffnung verjüngen, und auswechselbar auf deren Oeffnungen aufsetzbaren, formschlüssig anliegenden Füssen besteht, welche wenigstens teilweise hohl ausgebildeten Füsse auf der der Grundplatte zugewandten Stirnseite offen, an der andern Stirnseite verschlossen sind.

Die von der Grundplatte des Stützteils einseitig abstehenden Ausformungen haben vorzugsweise einen regelmässig ausgebildeten quadratischen Raster von 5 - 25 cm, insbesondere etwa 20 cm. Ein zu grosser Raster würde die maximal zulässige Punktbelastung erniedrigen und Wandanschlüsse erschweren, ein zu kleiner Raster in den Hohlboden eingezogene Leitungen in wesentlichem Ausmass behindern. Die Abmessungen der Grundplatte betragen in beiden Richtungen ein Mehrfaches des Rasters, insbesondere das 3 - 10 fache.

Die Ausformungen in der Grundplatte, welche auch Ausflüsse genannt werden können, sind aus fertigungstechnischen und statischen Gründen sowie wegen der erwünschten Montagefreundlichkeit meist als kegelstumpfförmige Trichter mit runder Oeffnung ausgebildet. Diese trichterförmigen Ausflüsse mit senkrecht zur Ebene der Grundplatte verlaufender Achse können auch konkave Seitenwände haben.

Selbstverständlich können die Ausformungen auch pyramidenstumpfförmig mit beispielsweise quadratischer oder sechseckiger Oeffnung ausgebildet sein. Die Formenvielfalt wird lediglich durch fertigungstechnische und wirtschaftliche Faktoren begrenzt.

Im Bereich der Oeffnung der Ausformungen einer Grundplatte wird zweckmässig erst auf der Baustelle je ein immer gleich langer Fuss aufgesetzt. Dies kann in einfacher Weise erfolgen, wenn der Oeffnung der Ausformungen ein von der Grundplatte wegweisender, in bezug auf deren Ebene vertikal ausgebildeten Kragen angeformt ist, der vorzugsweise 0,5 - 1,5 cm hoch ist. Der Durchmesser des Kragens ist unabhängig vom Raster und der Ausgestaltung der Ausformung und zweckmässig auf ein Normmass beschränkt.

Der Innendurchmesser des auswechselbar aufsetzbaren Fusses ist - mindestens im obersten Bereich - bevorzugt so bemessen, dass er formschlüssig bis zu einem Anschlag über den Kragen stülpbar ist und nach dem Aufsetzen angeklemmt festsitzt. Das Anklemmen dient lediglich dazu, das Wegfallen des Fusses zu verhindern. Wegen der flexibel ausgebildeten Grundplatte ist keine Höhenregulierung über die Füsse notwendig, wenn die Unterlage uneben ist. Die flexible Grundplatte gleicht diese Unebenheiten nach dem Ausfüllen automatisch aus, sodass alle Füsse auf der Unterlage aufliegen und ihre Stützfunktion erfüllen.

Die Füsse werden von unten aufgebracht. Ihre Tragfähigkeit muss so gross sein, dass das eingegossene und sonstwie vom Stützteil zu tragende Material unterhalb der Belastungsgrenze bleibt. Vorzugsweise muss die Tragfestigkeit auch die Begehbarkeit sicherstellen.

Nach einer ersten Variante sind die Füsse als Zylindermantel ausgebildet, welcher einends mit einer Membrane verschlossen ist. Eine flexible Membrane kann Unebenheiten in der rohen Unterlage ausgleichen und ist für die eingegossene Masse dennoch dicht. Die Füsse können aus einem Metall , wie Stahl, Aluminium, Kupfer oder Messing, oder einem thermoplastischen Kunststoff, wie einem Polyolefin, Polystyrol oder einem Polyester, bestehen. Perforationen von höchstens 1 mm$^2$ Querschnittsfläche gewährleisten den Feuchtigkeitshaushalt einer eingegossenen, aushärtenden Masse, welche dank ihrer Konsistenz nicht durch die Perforation fliessen kann. Weiter werden Kartonhülsen, insbesondere aus Papierkarton eingesetzt, welche innen und aussen mit einer perforierten Aluminiumfolie beschichtet sind. Die Wandstärke der Kartonhülse liegt bei 1 mm. In diesem Fall kann auf einer Stirnseite eine flexible, wenigstens einseitig kaschierte Aluminiumfolie als Verschlussmembrane eingesiegelt werden.

Nach einer zweiten Variante bestehen die Füsse aus einem becherförmig ausgestalteten Sieb, mit einer Maschenweite von höchstens 1 mm$^2$. Das Sieb kann wenn nötig durch eingebrachte Verstärkungen auf die notwendige Tragfähikeit gebracht werden. Es ist auf die Oeffnung der Ausformungen aufsetzbar.

Nach einer dritten Variante bestehen die Füsse aus einem tiefgezogenen (Metall) oder gespritzten (Kunststoff), auf die Oeffnung der Ausformungen aufsetzbaren Becher. Dieser ist im seitlichen Bereich mit Perforationen von höchstens 1 mm$^2$ lichter Fläche versehen und weist eine hinreichende Tragfähigkeit auf. Nach einer besonderen Ausführungsform ist nur der obere Teil des Fusses als Becher ausgebildet. Daran schliesst ein Profil an, welches im Querschnitt beispielsweise rund (Vollstab) oder ringförmig (Rohr) ist und auf der Unterlage abstützt. Im letzten Fall wird aber nur der poröse Becher mit fliessfähiger Masse oder einem Isolationsgranulat bzw. -pulver gefüllt, nicht aber beispielsweise ein nach unten anschliessendes rohrförmiges Profil

Siebe, Becher und Profile bestehen aus denselben Metallen oder Kunststoffen wie die aufsteckbaren, unten verschlossenen Zylindermäntel.

Nach dem Erhärten der eingegossenen Masse sind die sie umhüllenden Zylindermäntel, Siebe, Becher und dgl. im Prinzip nicht mehr notwendig.

Der auswechselbar aufsetzbare Fuss kann sich in nach einer weiteren Variante von der Grundplatte wegweisender Richtung insbesondere kontinuierlich verjüngen, was im zwischen dem Stützteil und der Unterlage gebildeten Hohlraum mehr Bewegungsfreiheit schafft.

Die Füsse können schon vor dem Ansetzen an die Grundplatte wenigstens teilweise gefüllt sein, z.B. mit erstarrter Masse für den Oberboden.

Die Länge eines auswechselbar aufsetzbaren Fusses kann beliebig sein, sie liegt vorzugsweise im Bereich von 2 - 30 cm, insbesondere 5 - 10 cm. Selbstverständlich wird in der Praxis die Länge der Füsse und deren Form auf einige Normmasse beschränkt, damit die Herstellung und die Lagerhaltung optimal gestaltet werden kann.

Die Grundplatte besteht vorzugsweise aus einem duktilen, rostfreien Metall, wie Stahl, Aluminium, einer Aluminiumlegierung, Kupfer oder Messing. Die Ausformungen werden mit üblichen Metallbearbeitungsverfahren hergestellt, beispielsweise durch Fliesspressen, Tiefziehen und/oder Abstrecken. Metallplatten haben auch den Vorteil, dass sie eine hohe Wärmeleitfähigkeit aufweisen und bei einer Bodenheizung mittels eines durch den Unterbodenhohlraum strömenden Mediums den Wärmedurchgang nicht behindern. Weiter verhindern Grundplatten aus Metall eine elektrostatische Aufladung.

Weiter können für die Herstellung der Grundplatte thermoplastische Kunststoffe eingesetzt werden, insbesondere Polyolefine, wie Polyäthylen und Polypropylen, Polyaromate, wie Polystyrol, oder Polyester eingesetzt werden. Die im Spritzverfahren hergestellten Grundplatten können z.B. nach dem Aushärten eines Oberbodens durch einen Heissluftstrom geschmolzen bzw. verbrannt werden, wodurch eine gute thermische Leitfähigkeit des Oberbodens gewährleistet ist.

Sowohl bei Grundplatten aus Metall als auch aus Kunststoff wird deren Wandstärke zweckmässig derart bemessen, dass eine verlegte formgebende Schalung einerseits ohne weitere Hilfsmittel begehbar ist, sich aber andrerseits nach dem Eingiessen der aushärtenden Masse den Unebenheiten eines Rohbodens anpasst. Auch eine Wölbung wird hier als Unebenheit bezeichnet. Damit können Investitionskosten vermindert und die Arbeitszeit verkürzt werden. In der Praxis liegt die Wandstärke, abhängig von der zum Ziel gesetzten Belastbarkeit und dem Material der Grundplatte, zwischen 0,5 und 1,5 mm, vorzugsweise jedoch im unteren Bereich.

Erfindungsgemäss werden die Stützteile als formgebende Schalung für in situ aushärtende Oberböden und Aussenwand drainagen verwendet, wobei die Ränder der Grundplatte der Stützteile stossend oder überlappend miteinander verbunden sind, und das Stützteil nach dem Aushärten der Masse keine statische Funktion hat.

Die Ränder der Stützteile überlappen bevorzugt mit etwa 1 cm und werden in bekannter Weise durch Schrauben, Nieten oder Punktschweissen auf der Baustelle miteinander verbunden.

Die Konsistenz der fliessfähigen, selbstaushärtenden Masse ist so bemessen, dass diese nicht zwischen den aufeinander liegenden Rändern der Grundplatte hindurch in den Hohlraum dringen kann.

Die Einsatzmöglichkeiten für die Schalung sind ausserordentlich vielfältig, sie kann sofort ohne Flächenverluste für Fussböden sämtlicher Arten sowie für Dachterrassen, Parkdecks oder Dachgärten verwendet werden. Sie kann weiter überall dort, wo ein Dampfausgleichsraum benötigt wird, eingesetzt werden, auch auf kleinen Flächen.

Die grosse Flexibilität des Systems lässt eine vielseitige Nutzung der gebildeten Unterbodenhohlräume zu. Die notwendige Infrastruktur für Strom, Telefon, EDV-Kabel, Druckluft, Heizleitungen, Gebrachswasserleitungen, Abwasserleitungen, Lüftungskanäle, Warm- und Kaltluftzufuhr sowie für den Dampfausgleich kann in idealer Weise angeboten werden.

Die ausgeformten Grundplatten und die Stützfüsse werden zweckmässig in separaten Verpakkungseinheiten gelagert und auf die Baustelle transportiert. Dort werden die Füsse aufgesteckt und die Grundplatten miteinander verbunden. Die Einbringung der Materialien in die formgebende Schalung und die Herstellung des Hohlbodens können auf verschiedene Arten erfolgen:

- Eine fliessfähige, selbstaushärtende Masse, z.B. synthetisches, anhydritgebundenes Mischmaterial wird in einem Guss eingetragen. Vorzugsweise wird das Produkt SELVO-PLAN der Firma Balz Vogt AG, CH-8855 Wangen, verwendet.

- Vorerst werden die Vertiefungen in einem ersten Arbeitsgang bis zur Ebene der Grundplatte mit einer selbstaushärtenden, fliessfähigen Masse gefüllt, die nicht aus synthetischem Anhydrit besteht und die gesamte Konstruktion verbilligt. In einem zweiten Arbeitsgang wird eine fliessfähige, anhydritgebundene Masse eingebracht, welche selbstnivellierend ist.

- Die Vertiefungen werden bis zur Ebene der Grundplatte mit zementgebundener Masse gefüllt. In einem zweiten Arbeitsgang wird wiederum eine fliessfähige, anhydritgebundene Masse eingebracht, welche selbstnivellierend ist.

- Die Vertiefungen werden mit einer körnigen Schüttung von Isolationsmaterialien, beispielsweise Kork oder Polyurethan, bis zur Ebene der Grundplatte gefüllt. In einem zweiten Arbeitsgang wird eine fliessfähige, anhydritgebundene Masse eingebracht, welche selbstnivellierend ist.

- Eine fliessfähige, zementgebundene Masse wird in zwei Etappen eingebracht, vorerst bis zur Ebene der Grundplatte, dann die selbstnivellierende Schicht.

Nach weiteren Varianten können Isolationsplatten, auch mit eingelegten Heizungsleitungen, auf die formgebende Schalung gelegt werden, nachdem die Vertiefungen der Grundplatten mit einem fliessfähigen, selbstaushärtenden Material gefüllt worden sind.

Neben der vielfältigen Verwendung des erfindungsgemässen Stützteils liegen weitere, bedeutende Vorteile - wie bereits angetönt - darin, dass Grundplatten und Füsse frei miteinander kombiniert werden können, was die Beschaffungs-und Lagerhaltungskosten erheblich vermindert.

Die Erfindung wird anhand der in der Zeichnung dargestellten Ausführunsbeispiele näher erläutert. Es zeigen schematisch:

- Fig. 1 eine Draufsicht auf die Grundplatte eines Stützteils,

- Fig. 2 eine aufgeschnittene Ansicht eines Stützteils,

- Fig. 3 einen Schnitt durch die Verbindung der Ränder von zwei Grundplatten,

- Fig. 4 einen Längsschnitt durch die Wand eines Stützteilfusses,

- Fig. 5 einen Vertikalschnitt durch einen Fussboden, und

- Fig. 6 eine Variante von Fig. 5.

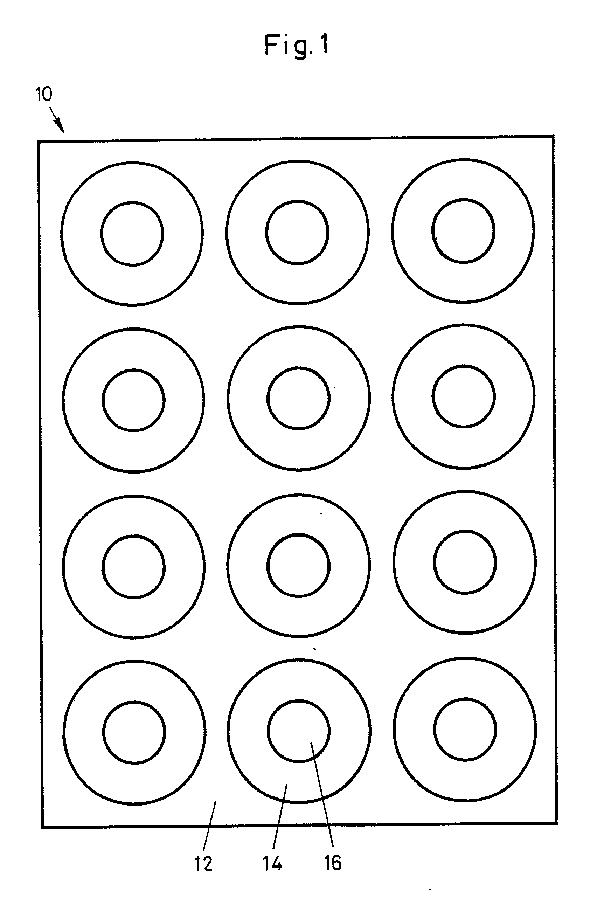

Eine in Fig. 1 dargestellte Grundplatte 12 eines im wesentlichen tafelförmig ausgebildeten Stützteils 10 ist etwa 0,75 mm dick und misst 80 x 60 cm. Mit einem quadratischen Raster von 20 cm sind zwölf kegelstumpfförmige, trichterförmig nach unten verlaufende Ausformungen 14 mit einer Oeffnung 16 angebracht. Nach einer andern, nicht dargestellten Variante misst die Grundplatte 120 x 80 cm und hat 24 Ausformungen 14.

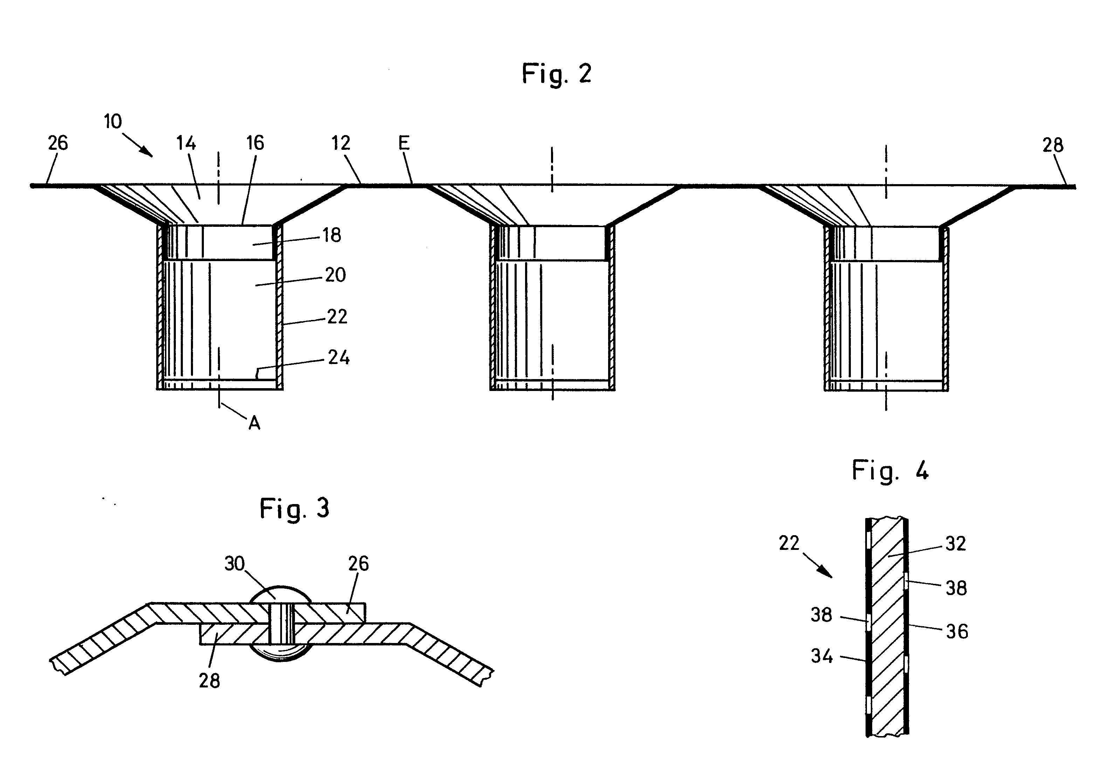

Fig. 2 zeigt das Stützteil 10 mit der Grundplatte 12, die Ausformungen 14 begrenzenden, vertikal zur Ebene E der Grundplatte 12 verlaufenden Kragen 18 und darüber gestülpten Füssen 20, welche letztere eine Längsachse A haben. Die Füsse 20 bestehen im wesentlichen aus Karton, wobei die von der Grundplatte 12 wegweisende Stirnseite des Zylindermantels 22 mit einer eingesiegelten, flexiblen Membrane 24 aus kaschiertem Aluminium verschlossen ist.

Fig. 3 zeigt die Verbindung der umlaufenden Ränder 26, 28 von zwei Grundplatten mittels eines Niets 30. Die Nieten 30 sind, wie andere anwendbare Punktverbindungen, in einem Abstand von 5 - 15 cm angebracht. Alle Grundplatten 12 sind entsprechend miteinander verbunden und bilden die formgebende Schalung.

Der in Fig. 4 dargestellte, vergrösserte Abschnitt eines Zylindermantels 22 (Fig. 2) besteht aus einer Kartonhülse 32, welche beidseits mit einer Aluminiumfolie 34, 36 beschichtet ist. Die Aluminiumfolien 34, 36 weisen ihrerseits bis 1 mm² grosse Perforationen 38 auf, welche der Regelung des Feuchtigkeitshaushalts einer aushärtenden Masse dienen.

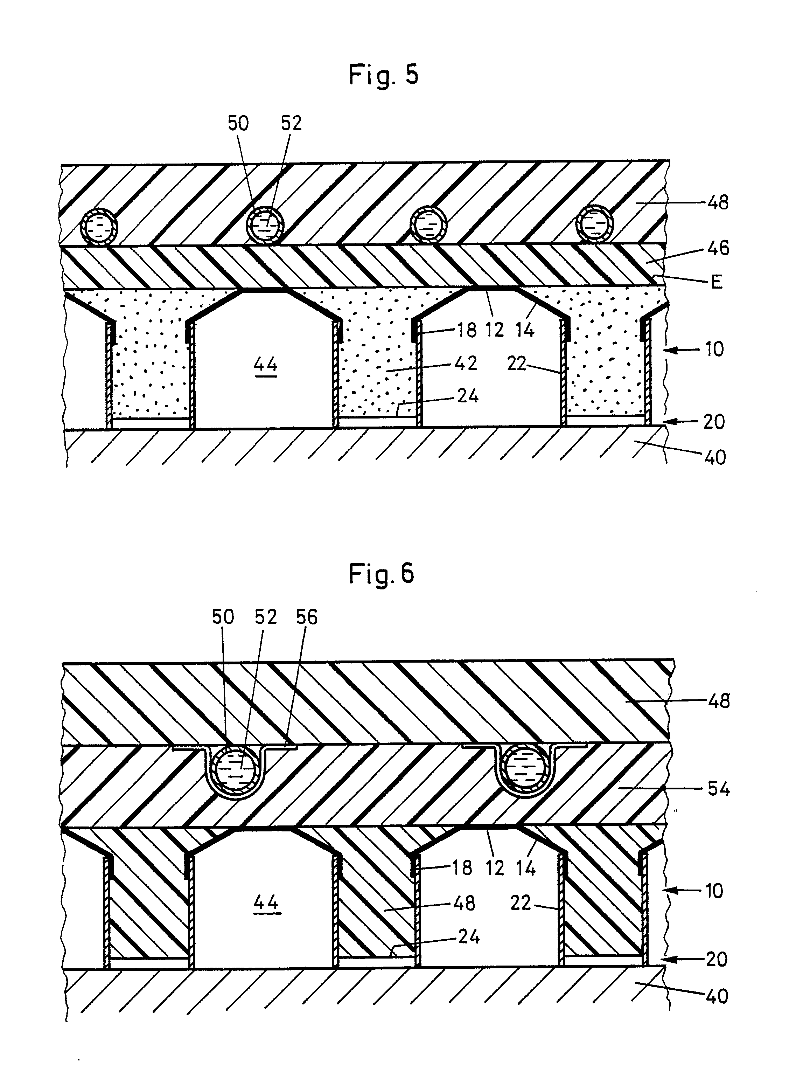

Fig. 5 zeigt ein mit den Füssen 20 auf einem Rohboden 40, der Unterlage, aufliegendes Stützteil 10. Die unten mit einer Membrane 24 verschlossenen, von den Ausformungen 14 und den Füssen 22 gebildeten Vertiefungen des Stützteils 10 sind bis zur Ebene E der Grundplatte 12 mit granuliertem Isolationsmaterial 42 aus Kork gefüllt. Aus Uebersichtlichkeitsgründen ist die Membrane 24 vom Rohboden 40 entfernt gezeichnet, in Wirklichkeit liegt diese wenigstens teilweise darauf abgestützt.

Der gebildete, durchgehende Unterbodenhohlraum 44 kann für Kabel , Leitungen und/oder ein durchströmendes Medium nutzbringend verwendet werden.

Auf die Grundplatte 12 bzw. das granulierte Isolationsmaterial 42 ist eine Schallisolationsmatte 46 gelegt. Diese wird mit einer fliessfähigen, selbstaushärtenden Masse 48, welche selbstnivellierend ist, übergossen. Vorher werden Heizungsrohre 50 eingelegt, welche von Warmwasser 52 durchflossen sind.

Fig. 6 unterscheidet sich in folgenden Punkten von Fig. 5:
- Die von den Ausformungen 14 und den Füssen 20 der Grundplatte 12 gebildeten Vertiefungen sind mit der fliessfähigen, selbstaushärtenden Masse 48 gefüllt.
- Auf der Ebene E der Grundplatte 12 ist eine Isolationsschicht 54 angeordnet.
- Die Heizungsrohre 50 sind in der Isolationsschicht 54 angeordnet und haben Verteillamellen 56, welche sich entlang der Grenzfläche der Isolationsschicht 54 zum Oberboden aus der Masse 48 erstrecken.

## Ansprüche

1. Tafelförmig ausgebildetes, flexibles Stützteil (10) für den Hoch- und Tiefbau, mit Stoss- bzw. Ueberlappungsrändern (26, 28) zum Zusammenfügen und parallel zu den Rändern (26, 28) in Abstand regelmässig angeordneten, einseitig ausgebildeten Vertiefungen, welche dicht verschliessend zur Aufnahme einer fliessfähigen, selbstaushärtenden Masse (48) geeignet sind, wobei das Stützteil (10) nach dem Einfüllen der Masse dank der Flexibilität Unebenheiten ausgleichend mit allen Vertiefungen auf einer Unterlage (40) aufliegt und bauseits einen durchgehenden Hohlraum (44) zur Aufnahme von Leitungen und/oder Medien bildet, dadurch gekennzeichnet, dass das Stützteil (10) aus einer flexiblen Grundplatte (12) mit Ausformungen (14), welche sich in Richtung von deren parallel zur Ebene (E) der Grundplatte (12) verlaufenden Oeffnung (16) verjüngen, und auswechselbar auf deren Oeffnungen (16) aufsetzbaren, formschlüssig anliegenden Füssen (20) besteht, welche wenigstens teilweise hohl ausgebildeten Füsse (20) auf der der Grundplatte (12) zugewandten Stirnseite offen, an der andern Stirnseite verschlossen sind.

2. Stützteil nach Anspruch 1, dadurch gekennzeichnet, dass die mit einem quadratischen Raster von 5 - 25 cm, vorzugsweise etwa 20 cm, angeordneten Ausformungen (14) der Grundplatte (12) kegelstumpfförmige Trichter mit senkrecht zur Ebene (E) verlaufender Achse (A) bilden.

3. Stützteil nach Anspruch 1 oder 2, dadurch gekennzeichnet, dass der Oeffnung (16) der Ausformungen (14) ein von der Ebene (E) der Grundplatte (12) wegweisender, in bezug auf diese Ebene (E) vertikal ausgebildeter Kragen (18) angeformt ist, welcher vorzugsweise eine Höhe von 0,5 - 1,5 cm hat.

4. Stützteil nach Anspruch 3, dadurch gekennzeichnet, dass die Füsse (20) formschlüssig über den Kragen (18) gestülpt festsitzen.

5. Stützteil nach einem der Ansprüche 1 - 4, dadurch gekennzeichnet, dass die Füsse (20) einends mit einer Membrane (24) verschlossene Zylindermäntel (22), Siebe, Siebe mit Stützprofil oder Becher sind, wobei der seitliche Bereich der Zylindermäntel (22) und Becher höchstens 1 mm² grosse Poren aufweist oder die Maschenweite eines Siebs höchstens 1 mm² gross ist.

6. Stützteil nach einem der Ansprüche 1 - 5, dadurch gekennzeichnet, dass die Länge eines auswechselbaren Fusses (20) 2 - 30 cm, vorzugsweise 5 - 10 cm, beträgt.

7. Stützteil nach einem der Ansprüche 1 - 6, dadurch gekennzeichnet, dass die Grundplatte (12) 0,5 - 1,5 mm dick und begehbar ist.

8. Stützteil nach einem der Ansprüche 1 - 7, dadurch gekennzeichnet, dass die Grundplatte (12) und die Zylindermäntel, Siebe oder Becher der Füsse (20) aus einem duktilen, rostfreien Metall, vorzugsweise Stahl, Aluminium, einer Aluminiumlegierung, Kupfer oder Messing, oder einem thermoplastischen Kunststoff, vorzugsweise Polyäthylen, Polypropylen, Polystyrol oder einem Polyester, bestehen, mit einer Membrane (24) verschlossene Zylindermantel (22) von Füssen (20) auch aus einer beidseits mit einer perforierten Aluminiumfolie beschichteten Kartonhülse (32).

9. Verwendung des Stützteils (10) nach einer der Ansprüche 1 - 8 als formgebende Schalung für in situ aushärtende Massen für Oberböden und Aussenwanddrainagen, wobei die Ränder (26, 28) der Grundplatte (12) stossend oder überlappend miteinander verbunden sind, und das Stützteil nach dem Aushärten der Masse keine statische Funktion hat.

10. Verwendung des Stützteils (10) nach Anspruch 9 als formgebende Schalung mit etwa 1 cm überlappenden, durch Schrauben, Nieten (30) oder Punktschweissen verbundenen Rändern (26, 28).

# Fig.1

# Fig. 2

Fig. 3

Fig. 4

EP 0 368 804 A1

## Fig. 5

## Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-C-3 434 872 (BAUER)<br>* Spalte 1, Zeile 28 - Spalte 3, Zeile 20 Figs 1-5 *<br>--- | 1,2,3,4 ,5,7,8, 9 | E 04 F 15/024<br>E 04 B 5/48<br>F 24 D 3/14<br>F 24 D 5/10 |
| D,A | WO-A-8 602 120 (BTA BODEN-TECHNIK AG)<br>* Seite 2, Zeile 26 - Seite 8, Zeile 26 Figs 1-3 *<br>--- | 1,2,7,8 ,9,10 | |
| A | DE-A-3 113 633 (HÖLLFRITCH)<br>* Seite 8, Zeile 6 - Seite 13, Zeile 20 Figs 1,2 *<br>--- | 1,4,5,7 ,8,9 | |
| A | DE-A-2 164 897 (HÖLLFRITCH)<br>* Seite 4, Zeilen 4-12; Seite 7, Zeile 3 - Seite 14, Zeile 10 Figs 1-5 *<br>----- | 1,4,5,8 ,9 | |

**RECHERCHIERTE SACHGEBIETE (Int. Cl.5)**

E 04 F
E 04 B
F 24 D
E 01 C

Der vorliegende Recherchenbericht wurde für alle Patentansprüche erstellt

| Recherchenort | Abschlußdatum der Recherche | Prüfer |
|---|---|---|
| DEN HAAG | 16-01-1990 | AYITER J. |

EPO FORM 1503 03.82 (P0403)